# EUROPEAN PATENT APPLICATION

(11) **EP 4 823 040 A1**
(43) Date of publication of application: **14.10.2026**
(21) Application number: 26169954.0
(22) Date of filing: 31.03.2026
(51) Int. Cl.: H04L 9/40, H04L 41/16, H04N 21/25

(54) **DETECTING ANOMALOUS CONNECTIONS AND PROXY USAGE FOR NETWORK SESSIONS**

(30) Priority: 07.04.2025 US 202519172458
(71) Applicant: Disney Enterprises, Inc., Burbank, CA 91521 (US)
(72) Inventor: Russell, Edward, Burbank, 91521 (US); Epres, Marlo Nagrampa, Burbank, 91521 (US); Keychenko, Nikolai Feodor, Burbank, 91521 (US); Goldsmith, Sean, Burbank, 91521 (US)
(74) Representative: 2pi Patent Consulting GbR

(57) **Abstract**

Embodiments provide techniques for evaluating and validating network sessions. A first set of connection data associated with a first interaction of a network session between a client and a server is accessed, where the first set of connection data comprises a first internet protocol (IP) address of the client. A second set of connection data associated with a second interaction of the network session is accessed. An anomaly score for the network session is generated based on at least one of the first set of connection data or the second set of connection data using an anomaly model. Upon determining, based on the anomaly score, that the network session is anomalous, the network session is invalidated and an indication that the first IP address is indicative of anomalous connectivity is stored.

## Description

### CROSS-REFERENCE TO RELATED APPLICATIONS

This application claims benefit of and priority to United States patent application serial number 19/172,458, entitled "Detecting Anomalous Connections and Proxy Usage For Network Sessions", filed April 7, 2025. The aforementioned related patent application is herein incorporated by reference in its entirety.

### BACKGROUND

An ever-increasing number of network systems exist to provide a wide variety of services to users. For example, systems are available for hosting, downloading, and/or uploading data, transmitting messages, streaming data, ecommerce, digital authentication, performing computational operations, and the like. In many cases, these digital services are provided using a subscription-based platform, where services are provided only (or preferably) to subscribing users (and non-subscribed users receive lesser priority or are denied service entirely). Ensuring platform security is important to maintaining the integrity of such digital services. Many platforms therefore use various techniques to accurately identify allowed and disallowed users or connections.

### BRIEF DESCRIPTION OF THE DRAWINGS

So that the manner in which the above recited aspects are attained and can be understood in detail, a more particular description of embodiments described herein, briefly summarized above, may be had by reference to the appended drawings.

It is to be noted, however, that the appended drawings illustrate typical embodiments and are therefore not to be considered limiting; other equally effective embodiments are contemplated.
Figure 1 depicts an example system for detecting anomalous connectivity, according to some embodiments of the present disclosure.
Figure 2 depicts an example system for detecting anomalous sessions on streaming systems, according to some embodiments of the present disclosure.
Figure 3 is a flow diagram depicting an example method for detecting anomalous network connectivity, according to some embodiments of the present disclosure.
Figure 4 is a flow diagram depicting an example method for generating anomaly scores for network sessions, according to some embodiments of the present disclosure.
Figure 5 is a flow diagram depicting an example method for identifying anomalous sessions, according to some embodiments of the present disclosure.
Figure 6 depicts an example computing device configured to perform various embodiments of the present disclosure.

### DETAILED DESCRIPTION

Embodiments of the present disclosure provides techniques for network session evaluation to identify anomalous connectivity or sessions.

Many digital services are geographically limited, where the services are intended for users of a given region (or are not intended to be delivered to users in a given region). In some cases, users may attempt to circumvent such geographic constraints using technologies such as virtual private networks (VPNs). For example, a user located in one country may use a VPN to route their network session through another country to avoid restrictions placed on connections from their own country and/or to access services intended for residents of the other country. Generally, such routing services route the client traffic through a server or other computing device in the designated region, allowing the traffic to be forwarded to the end target (e.g., a digital service) while having an internet protocol (IP) address belonging to the designated region.

Often, such routing services route client traffic through data centers or large compute centers capable of handing the potentially large volume of traffic. However, such data centers are readily identifiable, and many digital service providers filter or block connections originating from such centers (or, in the case of a VPN user, traffic that appears to originate in such a data center). In order to circumvent such restrictions, some VPNs or other routing services use residential systems (e.g., IP addresses assigned to residential users, as opposed to commercial data centers) to route some or all of the traffic. In some embodiments, routing data through a separate computing system may be referred to as using a "proxy." In some embodiments, proxies that use residential addresses (as compared to data center IP addresses) may be referred to as residential proxies. As additional examples, data may be routed via transparent proxies (e.g., proxies that pass the original IP address to the destination and do not hide the fact that the user is using a proxy), anonymous proxies (e.g., proxies that hide the user's IP address but reveal that a proxy is being used), mobile proxies (e.g., proxies that use IP addresses assigned by mobile carriers, such that the request appears to be originating from a mobile device), DNS proxies (e.g., proxies used to handle DNS requests, potentially bypassing geo-restrictions), Tor onion proxies (e.g., proxies that route traffic through the Tor network), and the like. In some embodiments, proxies may broadly be referred to as "data center proxies" to indicate that the data is routed through a data center (e.g., a set of one or more servers or other computing systems dedicated to providing computing services, including proxy routing services, to remote users) and/or as "non-data center proxies" to indicate that the data is routed through computing systems or IP addresses that are not assigned to such data centers (e.g., residential systems or addresses).

While use of proxies can obfuscate the user, many proxies, and particularly non-data center proxies are often significantly limited in their capacity. In some embodiments of the present disclosure, techniques are provided to identify anomalous network sessions that are using (or are suspected of using) routing services such as VPNs. In some embodiments, network sessions may be identified as anomalous if the traffic is suspected of being routed using one or more specific types of proxy, such as an anonymous proxy or a residential proxy.

Anomalous connections originating from such external service providers that route traffic through endpoints that appear legitimate (e.g., using a residential address) have become increasingly common.

In some embodiments, the techniques described herein can facilitate identification of when legitimate connections are compromised by external service providers using anomalous routing, preventing unauthorized access. In some embodiments, the techniques described herein can protect legitimate users whose connections may be misclassified due to interference, minimizing disruption to their access. That is, while misidentification of legitimate users can degrade the service experience of such users, embodiments of the present disclosure can enhance accuracy and minimize unintended disruptions to such users by more accurately identifying anomalous sessions.

Some conventional approaches to detect such anomalous connections rely on third-party datasets or services (e.g., daily updated lists of IP addresses being used by such routing services), which introduces a substantial delay that anomalous routing services can exploit. In some embodiments, of the present disclosure, continuous monitoring of network sessions can be provided to capture patterns indicative of anomalous routing. For example, embodiments of the present disclosure may utilize checks at multiple stages of the connection lifecycle, increasing the likelihood of identifying anomalous patterns while reducing the probability of flagging legitimate users.

In some embodiments, the network session may be tracked once an anomalous connection pattern is identified, logging behavior across all service calls in order to refine or confirm the prediction. Similarly, in some embodiments, real-time inputs can be used to distinguish consistent legitimate behavior from dynamic routing anomalies using a layered detection approach that conducts checks at multiple interaction points, tracking routing consistency throughout the session.

In some embodiments, a context-specific approach can be employed, utilizing platform-specific data, such as session behavior and interaction patterns, to improve detection accuracy for individual platforms. Further, in some embodiments, adaptive learning can be used to allow the system to dynamically adjust to emerging connection patterns, providing a more responsive and robust detection framework.

In some embodiments, the system can automatically invalidate network connections or sessions if anomalous behavior is detected. In some embodiments, the system can further dynamically update the routing database based on these detections (e.g., to flag IP addresses as suspicious or potentially anomalous), continuously refining the classification of connection patterns to ensure accuracy and reduce false positives.

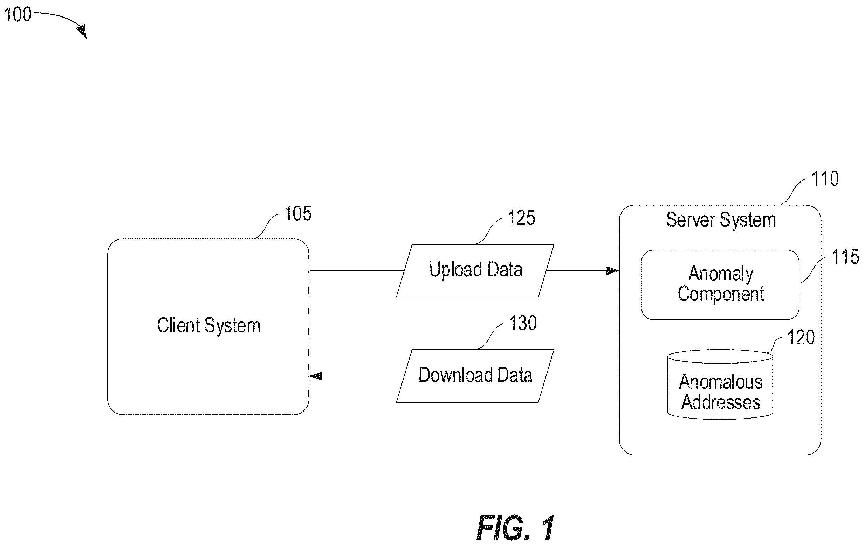

Figure 1 depicts an example system 100 for detecting anomalous connectivity, according to some embodiments of the present disclosure.

In the illustrated example, a client system 105 is communicatively coupled with a server system 110. The client system 105 is generally representative of a computing device used by a client or user to access one or more digital services (e.g., provided by the server system 110), such as hosting data, downloading and/or uploading data, transmitting messages, streaming data, ecommerce, digital authentication, performing computational operations, and the like. For example, the client system 105 may correspond to a smartphone, laptop computer, desktop computer, tablet, and the like.

The server system 110 is generally representative of a computing device used to facilitate provisioning of one or more digital services. The server system 110 may itself represent a digital service provider (that is, the server system 110 may provide the digital service) or may be a discrete system that performs anomaly detection for one or more digital service providers. Although depicted as a discrete physical system for conceptual clarity, the server system 110 may be implemented using hardware, software, or a combination of hardware and software (e.g., in a cloud deployment), and the operations of the server system 110 may be combined or distributed across any number of components.

The client system 105 and server system 110 may be communicatively linked through any variety of connections and/or intermediary devices, including wired and/or wireless connections. Although the illustrated system 100 depicts a single client system 105 and a single server system 110, there may be any number of client systems 105 communicating with the server system 110 and/or any number of server systems 110 communicating with the client system 105.

In some embodiments, the client system 105 and server system 110 communicate via the Internet. In the illustrated example, the server system 110 receives upload data 125 from the client system 105 and transmits download data 130 to the client system 105. Generally, the particular contents and format of the upload data 125 and download data 130 may vary depending on the particular implementation (e.g., based on the particular digital service(s) being requested and/or provided to the client system 105).

For example, in the case of a media streaming service, the upload data 125 may include data to facilitate or perform session initialization, data to browse or select media for streaming, data to request a particular stream, and the like. Similarly, in a streaming environment, the download data 130 may include responses to the various requests, information about available streams, the media stream itself, and the like.

In the illustrated example, the server system 110 includes an anomaly component 115 and a database (or other repository) of anomalous addresses 120. Although depicted as a single discrete component for conceptual clarity, the operations of the anomaly component 115 may be combined or distributed across any number and variety of components, and may be implemented using hardware, software, or a combination of hardware and software.

The anomaly component 115 may generally collect and evaluate connection data for network sessions between client system(s) 105 and the server system 110 in order to identify or predict anomalous connectivity. For example, as discussed above, the anomaly component 115 may determine that a given network session is anomalous based on predicting or inferring that the client system 105 is communicating via a proxy (e.g., a VPN or other proxy) that masks the true identity of the client system 105 (e.g., the true IP address of the client system 105, the true geographic location of the client system 105, and the like).

In some embodiments, the anomaly component 115 may evaluate the network session at multiple discrete points or interactions of the session. For example, each time the client system 105 transmits upload data 125 may correspond to a discrete "interaction" of the network session. In some embodiments, the discrete "interactions" may be defined based on the digital service being provided. For example, in a streaming system, the "interactions" may include a first interaction for session initialization (e.g., when the client system 105 authenticates or begins a session), a second interaction for browsing or requesting a list of available media, a third interaction for initiating or requesting a particular stream of data, a fourth interaction for actively streaming data, and the like.

In some embodiments, at each interaction point, the anomaly component 115 may generate an anomaly score (or other measure) indicating whether the session is anomalous (e.g., quantifying the probability that the session is anomalous). This anomaly score may correspond to or include a classification (e.g., a binary classification as legitimate or anomalous) and/or a continuous value (e.g., a probability between zero and one that the connection is legitimate or anomalous).

In some embodiments, the anomaly score at any given time may be defined based on the connection data in association with that interaction and/or based on changes in the connection data over time (e.g., over points or communications within the same interaction event or between different interaction events).

For example, in some embodiments, the anomaly component 115 may generate the anomaly score based (at least in part) on the IP address of the connection (e.g., the IP address given as the source address for a given packet of upload data 125 and/or for a given interaction). In some embodiments, the anomaly component 115 may search the repository of anomalous addresses 120 to determine if the provided IP address is indicated as potentially anomalous, and may generate the score based in part on whether the address is found in the list of anomalous addresses 120.

In some embodiments, the anomaly component 115 may additionally or alternatively evaluate whether the provided source IP address has changed or matches (e.g., between one or more prior uploads or interactions and the current upload or interaction). For example, while occasional IP address switches may be legitimate, the session may be more likely to be anomalous if the IP address changes frequently (e.g., repeatedly across a few interactions or uploads) and/or rapidly (e.g., changing with very little latency between uploads, such as if a new packet with a new the source address is received within a few hundred milliseconds of a prior packet having a prior source address). Such frequent and/or rapid changes may be positively correlated with anomalous connectivity. In contrast, if the IP address matches across the entire session, it may be less likely that the user is relying on a proxy service.

As another example, the anomaly component 115 may evaluate the latency of the connection or session (with respect to the current upload and/or interaction). For example, the connectivity data may indicate the current or average latency (e.g., the time it takes for traffic to travel from the client system 105 to the server system 110 and/or vice versa), as many proxy services introduce noticeable latency to communications.

In some embodiments, the anomaly component 115 may additionally or alternatively evaluate the latency of the connection over time or interactions (e.g., the jitter of the connection). For example, rapid and/or substantial changes in latency across uploads or interactions may be indicative of significant routing changes, which may indicate that the client system 105 is using a routing or proxy service.

As another example, the anomaly component 115 may evaluate the retry rate of the network session with respect to the current interaction and/or the changes in retry rate over time (e.g., the number or percentage of packets that had to be re-sent by the client system 105 and/or the server system 110 due to becoming lost or corrupted during transit). For example, high retry rates may be indicative of proxy usage, as such proxies (and particularly non-data center proxies) often have relatively low stability. Further, high retry rates may indicate that the routing is being updated frequently, reflective of proxy usage. Additionally, frequent and/or substantial changes in the retry rate may be indicative of the client system 105 switching between different proxies.

As another example, the anomaly component 115 may evaluate the bandwidth of the network session with respect to the current interaction and/or the changes in bandwidth over time (e.g., estimating the bandwidth based on the time it takes for the client system 105 to transmit and/or receive a given amount of data). For example, proxies (particularly non-data center proxies) often have relatively low bandwidth. Further, frequent and/or substantial changes in the available bandwidth may be indicative of the client system 105 switching between different proxies.

As yet another example, the anomaly component 115 may evaluate the reported or inferred geolocation of the client system 105 (as indicated by the source IP address) with respect to the current interaction and/or the consistency in geolocation over time. For example, if the reported geolocation of the client system 105 is inconsistent or changes rapidly (e.g., changing by at least a threshold physical or geographical distance over a relatively brief period of time, such as if the client system 105 was moving at least a threshold speed), the anomaly component 115 may infer that the client system 105 is utilizing proxy routing, (e.g., using proxies in different physical locations).

Generally, the anomaly component 115 may evaluate any number and variety of features in the connectivity data, including all or a subset of the above features and/or one or more additional features not listed above. In some embodiments, some or all of these features may be evaluated on a per-transmission (or per-interaction) basis. Similarly, some or all of these features may be evaluated over time (e.g., across multiple interactions or transmissions) to predict whether the session is anomalous.

In some embodiments, the anomaly component 115 may use an anomaly model to evaluate the various features to generate the anomaly score. In some embodiments, the anomaly model may generally include or correspond to one or more rules-based and/or threshold-based algorithms or criteria, one or more trained machine learning models, and the like.

For example, in some embodiments, the anomaly component 115 uses a set of rules-based and/or threshold-based criteria to evaluate the various features and generate the anomaly score. For example, each feature may have a corresponding algorithm (e.g., used to quantify the impact of the value(s) of the given feature on the probability that the connection is anomalous) and/or a corresponding weight (e.g., indicating how important the feature is to the final prediction). That is, the anomaly component 115 may generate sub-scores for each feature using corresponding algorithms or rules, and/or may compute a weighted sum of these sub-scores to generate an overall anomaly score for the network session. In some embodiments, these rules, thresholds, and algorithms may be learned or fine-tuned over time (e.g., based on evolving proxy and routing techniques).

In some embodiments, the anomaly component 115 may use one or more trained machine learning models to evaluate the various features and generate the anomaly score. For example, each feature may have a corresponding model (e.g., a random forest model, a neural network model, and the like) used to generate a sub-score for each feature, and these features may be summed (e.g., using a weighted sum) to generate the overall anomaly score. As another example, the features may be provided as input to a unified model (e.g., a neural network, a random forest, and the like) to generate the overall anomaly score.

For example, to train the machine learning model(s), the anomaly component 115 (or another system or component) may use labeled exemplars, where each exemplar comprises one or more sets of connection data (e.g., IP address, jitter, latency, bandwidth, geolocation, retry rate, and the like) along with a corresponding label indicating whether the connection data belongs to an anomalous connection (e.g., one in which the client system 105 was using a proxy or VPN) or not. These labeled exemplars can be used to train the model(s) iteratively until the model learns to accurate predict whether a given session is anomalous based on real-time (or near real-time) connectivity data.

In some embodiments, once the anomaly component 115 determines that the network session with the client system 105 is anomalous (e.g., once the anomaly score satisfies one or more defined criteria, such as a minimum threshold), the anomaly component 115 may take a variety of actions. For example, in some embodiments, the anomaly component 115 may terminate or invalidate the network session (e.g., blocking the current and/or future interactions and requiring the client system 105 to re-authenticate or otherwise initiate a new session). In some embodiments, the anomaly component 115 may store an indication (e.g., in the repository of anomalous addresses 120) that the provided source IP address of the client system 105 (e.g., the first address used for session initialization, the most recent address provided in the most recent interaction, or all of the addresses provided) is (or are) indicative of anomalous connectivity. That is, the anomaly component 115 may store a record of the IP address(es) as indicative of potential proxy usage. In this way, if the same or a different client system 105 using a proxy service attempts to initiate a new session (using the same proxy), the anomaly component 115 may be more likely to identify the connection as anomalous relatively earlier in the session, reducing wasted computational expense and bandwidth incurred by allowing the session to continue.

In some embodiments, the records in the anomalous addresses 120 may be timebased or subject to expiration. For example, a recent record indicating anomalous connectivity may be given high weight when generating an anomaly score for a new connection using the same address, but as the record ages over time, the record may have a relatively lower weight (e.g., because the address may no longer be anomalous, such as if the proxy service(s) have stopped using the address and it is now assigned to a legitimate user). In some embodiments, if the anomaly component 115 subsequently determines that a new network session using the same IP address is not anomalous, the anomaly component 115 may store a new indication (e.g., in the anomalous addresses 120) that the IP address is not indicative of anomalous connectivity (or may delete or remove any records indicating that the IP address is indicative of anomalous activity). In these ways, when proxy services move on to new proxies and older proxies are re-assigned to legitimate users, the anomaly component 115 can rapidly learn to identify the newly legitimate use and therefore avoid blocking or interrupting legitimate users.

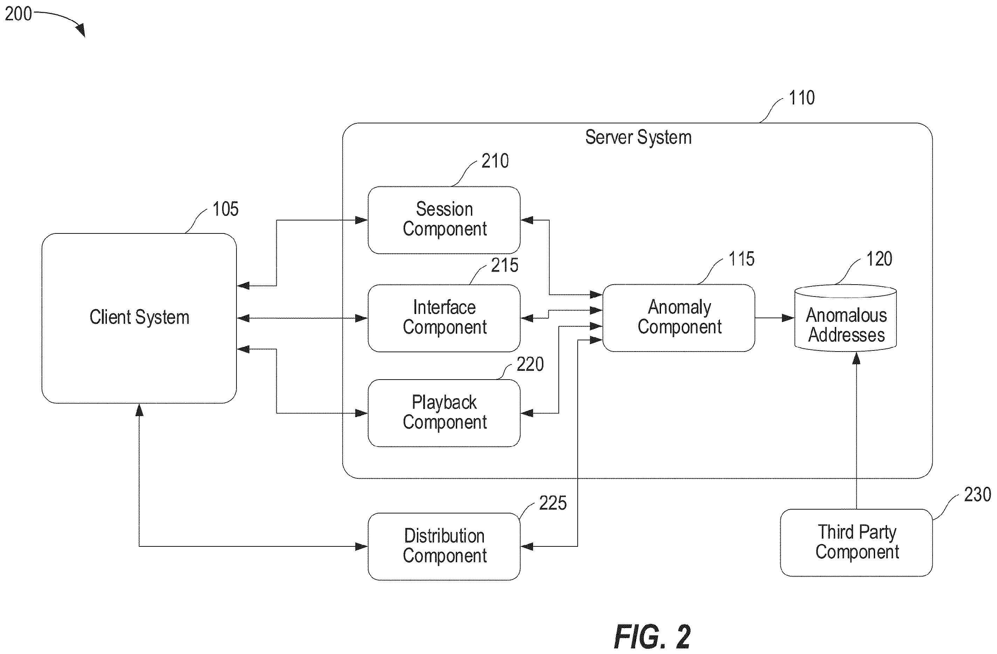

Figure 2 depicts an example system 200 for detecting anomalous sessions on streaming systems, according to some embodiments of the present disclosure. Specifically, in the illustrated example, in addition to the anomaly component 115, the server system 110 includes components to provide digital services (e.g., streaming services) to clients, including a session component 210, an interface component 215, and a playback component 220. Although depicted as discrete components for conceptual clarity, the operations of the session component 210, interface component 215, and playback component 220 may be combined or distributed across any number of components.

In the illustrated example, the system 200 further includes a distribution component 225 and a third party component 230. Although depicted as discrete components separate from the server system 110, in some embodiments, either or both of the distribution component 225 and the third party component 230 may be implemented as part of the server system 110. Further, in the illustrated example, the server system 110 and the distribution component 225 are communicatively coupled with the client system 105 (e.g., via the Internet), as discussed above.

In the illustrated example, the third party component 230 may correspond to a system or service that provides periodic updates to the repository of anomalous addresses 120. For example, the third party component 230 may use various techniques to identify IP addresses that are currently being used as proxies to route data from client systems 105 (which may include non-data center-based proxies and/or data center-based proxies), and may provide an updated list of such identified proxies to the anomalous addresses 120 periodically (e.g., daily). As discussed above, although such information may be a useful starting point for the anomaly evaluations, the relatively slow update period can cause the data to quickly become inaccurate. Relying on such inaccurate or outdated data can cause significant disruptions. For example, if a block of IP addresses were originally used as proxies but have been reassigned to legitimate users, the server system 110 may erroneously block such users if the list of anomalous addresses 120 is trusted without question. Similarly, if a block of IP addresses are newly used by routing services as proxies, the server system 110 may not recognize the anomalous use if the system relies only on the list of anomalous addresses 120.

In the illustrated example, the client system 105 can initiate a network session to stream data, where the session can be logically delineated into at least four distinct phases or interactions (each performed by as corresponding component in the illustrated example). In some embodiments, the anomaly component 115 may evaluate whether the network session is anomalous at least once for each stage or phase, as discussed in more detail below. In some cases, the anomaly component 115 may evaluate the connection data multiple times during each phase or stage.

For example, in the illustrated system 110, the session component 210 may be used to facilitate or orchestrate the initialization of network sessions (e.g., streaming sessions) for client systems 105. For example, the client system 105 may transmit one or more packets (e.g., the upload data 125 of Figure 1) to the session component 210 to initiate a streaming session. This initialization may include steps such as authentication of the client system 105 (or the user of the client system), such as by providing login information and requesting access to the streaming platform.

As illustrated, during this session initialization, the session component 210 may communicate with the anomaly component 115 to determine whether the session (or the request to initialize a session) is anomalous. For example, as discussed above, the session component 210 may collect and provide connectivity data for the session (e.g., the source IP address provided, the latency, jitter, and/or bandwidth of the communications, the indicated geolocation of the client system 105, and the like) to the anomaly component 115. In some embodiments, as discussed above, the anomaly component 115 can evaluate the various features using one or more rules-based and/or machine learning-based approaches to predict whether the session is anomalous. For example, the anomaly component 115 may determine whether the provided source IP address of the client system 105 is listed as anomalous in the list of anomalous addresses 120. Though presence in the list of anomalous addresses 120 may indicate suspicion, as discussed above, the anomaly component 115 may further evaluate other connectivity data (such as geolocation consistency, latency, jitter, and the like) to generate the anomaly score.

As illustrated, the anomaly component 115 may return an anomaly response to the session component 210. This response may generally indicate whether the session is believed to be anomalous (e.g., whether the client system 105 is believed to be using a proxy or other routing service to obfuscate their location or identity). The response may or may not include the anomaly score itself.

In some embodiments, if the response indicates suspected anomalous connectivity, the session component 210 may respond to the client system 105 with one or more packets (e.g., the download data 130 of Figure 1) denying session initialization (or by terminating or invalidating the session if one has already been initialized). If the response indicates that the connectivity is valid (or that there is insufficient evidence of suspicion), the session component 210 may initialize the streaming session for the client system 105 (assuming other requirements, such as authentication, are successful), transmitting data (e.g., the download data 130 of Figure 1) to confirm the session initialization.

In the illustrated example, the interface component 215 may then be used to perform the second phase of the streaming session. In some embodiments, the interface component 215 may handle browsing or interactions from the client system 105, such as to view available content to be streamed. For example, the client system 105 may transmit packets (e.g., the upload data 125 of Figure 1) to the interface component 215 to browse or search for media (e.g., searching by title, filtering by genre, or browsing in any other way).

In the illustrated example, the interface component 215 may communicate with the anomaly component 115 to determine whether the session associated with the browsing or interface requests is anomalous. For example, as discussed above, the interface component 215 may collect and provide connectivity data for the session (e.g., the source IP address provided, the latency, jitter, and/or bandwidth of the communications, the indicated geolocation of the client system 105, and the like) to the anomaly component 115. As discussed above, the anomaly component 115 can evaluate the various features using one or more rules-based and/or machine learning-based approaches to predict whether the session is anomalous.

In some embodiments, the anomaly component 115 may evaluate not only the current connectivity data for the session (e.g., the data collected by the interface component 215 while the client system 105 browses or interacts with the interface), but also the connectivity data collected during prior windows or phases of the session (e.g., connectivity data collected by the session component 210 during session initialization for the client system 105). For example, in addition to evaluating the current data, the anomaly component 115 may evaluate how the connectivity data has changed over time or between the session phases.

In some embodiments, as discussed above, the anomaly component 115 may similarly evaluate the connectivity data at different points (or during different windows) during the same phase of the session. For example, the anomaly component 115 may collect connectivity data during one portion of the browsing session, and may compare this information with connectivity data collected during a subsequent browsing action in order to evaluate whether the session is believed to be anomalous.

For example, as discussed above, changes in the connectivity data such as the geolocation, IP address, jitter, latency, retry rate, and the like across phases or other windows of time may be indicative of anomalous connectivity. In the illustrated embodiment, as discussed above, the interface component 215 may transmit one or more anomaly requests (e.g., one request per session, one request per communication with the client system 105, and/or periodic requests, such as one request per minute) to the anomaly component 115, and the anomaly component 115 may return corresponding anomaly score(s) for each request.

As discussed above, the anomaly response(s) provided by the anomaly component 115 may generally indicate whether the session is believed to be anomalous (e.g., whether the client system 105 is believed to be using a proxy or other routing service to obfuscate their location or identity). The response(s) may or may not include the anomaly score itself.

In some embodiments, if the response(s) indicate suspected anomalous connectivity, the interface component 215 may respond to the client system 105 with one or more packets (e.g., the download data 130 of Figure 1) invalidating or terminating the session. Additionally, or alternatively, the session component 210 may be used to invalidate or end the session. If the response indicates that the connectivity is valid (or that there is insufficient evidence of suspicion), the interface component 215 may proceed as normal (e.g., transmitting the requested list, search results, or other streaming information to the client system 105).

In the illustrated example, the playback component 220 may be used to perform the third phase of the streaming session. In some embodiments, the playback component 220 may facilitate the streaming of data to the client system 105 for requested content. For example, the client system 105 may transmit packets (e.g., the upload data 125 of Figure 1) to the playback component 220 to request playback or streaming information for a specific piece of media (e.g., selected while browsing via the interface component 215). As one example, the client system 105 may indicate the particular title or content that is desired, requesting a link or other information about where to actually retrieve the data.

In the illustrated example, the playback component 220 may communicate with the anomaly component 115 to determine whether the session associated with the content request is anomalous. For example, as discussed above, the playback component 220 may collect and provide connectivity data for the session (e.g., the source IP address provided, the latency, jitter, and/or bandwidth of the communications, the indicated geolocation of the client system 105, and the like) to the anomaly component 115. As discussed above, the anomaly component 115 can evaluate the various features using one or more rules-based and/or machine learning-based approaches to predict whether the session is anomalous.

In some embodiments, as discussed above, the anomaly component 115 may evaluate not only the current connectivity data for the session (e.g., the data collected by the playback component 220), but also the connectivity data collected during prior windows or phases of the session (e.g., connectivity data collected by the session component 210 and/or the interface component 215). Similarly, in some embodiments, the anomaly component 115 may evaluate the connectivity data at different points (or during different windows) during the same phase of the session (e.g., during the playback request). As discussed above, by evaluating how the connectivity data has changed over time and/or between the session phases, the anomaly component 115 may generate more accurate anomaly scores.

In the illustrated embodiment, as discussed above, the playback component 220 may transmit one or more anomaly requests for the session to the anomaly component 115, and the anomaly component 115 may return corresponding anomaly score(s) for each request. The anomaly response(s) provided by the anomaly component 115 may generally indicate whether the session is believed to be anomalous (e.g., whether the client system 105 is believed to be using a proxy or other routing service to obfuscate their location or identity), and may or may not include the anomaly score itself.

In some embodiments, if the response(s) indicate suspected anomalous connectivity, the playback component 220 may respond to the client system 105 with one or more packets (e.g., the download data 130 of Figure 1) invalidating or terminating the session, as discussed above. Additionally, or alternatively, the session component 210 may be used to invalidate or end the session. If the response indicates that the connectivity is valid (or that there is insufficient evidence of suspicion), the playback component 220 may proceed as normal. For example, the playback component 220 may identify one or more servers or systems located proximate to the client system 105 (e.g., geographically near to the client system 105 and/or topologically near in the network). That is, the playback component 220 may identify a distribution component 225 that is able to stream the requested data to the client system 105 based on factors such as load balancing between distribution systems, distance between the distribution component 225 and the client system 105 (so as to minimize latency in the stream), and the like. The playback component 220 may then provide the identity of (or a link to) the selected distribution component 225.

In the illustrated example, the distribution component 225 may be used to perform the fourth phase of the streaming session. In some embodiments, the distribution component 225 may perform the actual streaming of data to the client system 105 for the requested content. For example, the client system 105 may transmit packets (e.g., the upload data 125 of Figure 1) to the distribution component 225 to request the particular stream.

In the illustrated example, the distribution component 225 may communicate with the anomaly component 115 to determine whether the session associated with the request is anomalous. For example, as discussed above, the distribution component 225 may collect and provide connectivity data for the session (e.g., the source IP address provided, the latency, jitter, and/or bandwidth of the communications, the indicated geolocation of the client system 105, and the like) to the anomaly component 115. As discussed above, the anomaly component 115 can evaluate the various features using one or more rules-based and/or machine learning-based approaches to predict whether the session is anomalous.

In some embodiments, as discussed above, the anomaly component 115 may evaluate not only the current connectivity data for the session (e.g., the data collected by the distribution component 225), but also the connectivity data collected during prior windows or phases of the session (e.g., connectivity data collected by the session component 210, the interface component 215, and/or the playback component 220). Similarly, in some embodiments, the anomaly component 115 may evaluate the connectivity data at different points (or during different windows) during the same phase of the session (e.g., during the streaming or distribution of the data). As discussed above, by evaluating how the connectivity data has changed over time and/or between the session phases, the anomaly component 115 may generate more accurate anomaly scores.

In the illustrated embodiment, as discussed above, the distribution component 225 may transmit one or more anomaly requests for the session to the anomaly component 115 (e.g., periodically), and the anomaly component 115 may return corresponding anomaly score(s) for each request. The anomaly response(s) provided by the anomaly component 115 may generally indicate whether the session is believed to be anomalous (e.g., whether the client system 105 is believed to be using a proxy or other routing service to obfuscate their location or identity), and may or may not include the anomaly score itself.

In some embodiments, if the response(s) indicate suspected anomalous connectivity, the distribution component 225 may respond to the client system 105 with one or more packets (e.g., the download data 130 of Figure 1) invalidating or terminating the session, as discussed above. Additionally, or alternatively, the session component 210 may be used to invalidate or end the session. If the response indicates that the connectivity is valid (or that there is insufficient evidence of suspicion), the distribution component 225 may proceed as normal, transmitting the requested data stream to the client system 105.

In some embodiments, as discussed above, proxy systems (and in particular, non-data center proxies) may be relatively limited in terms of bandwidth, stability, and the like. Some routing services therefore use proxies (or non-data center proxies) only for some phases of the session (e.g., the less bandwidth intense phases), such as session initialization, browsing, media selection, and the like. However, these services often switch to more conventional proxies (e.g., data center proxies, or no proxy use at all) for the actual data streaming, which consumes substantial bandwidth. Therefore, by evaluating session connectivity data at each phases, the anomaly component 115 can readily identify whether a client system 105 is using such a proxy based on the change(s) in connectivity data across session phases.

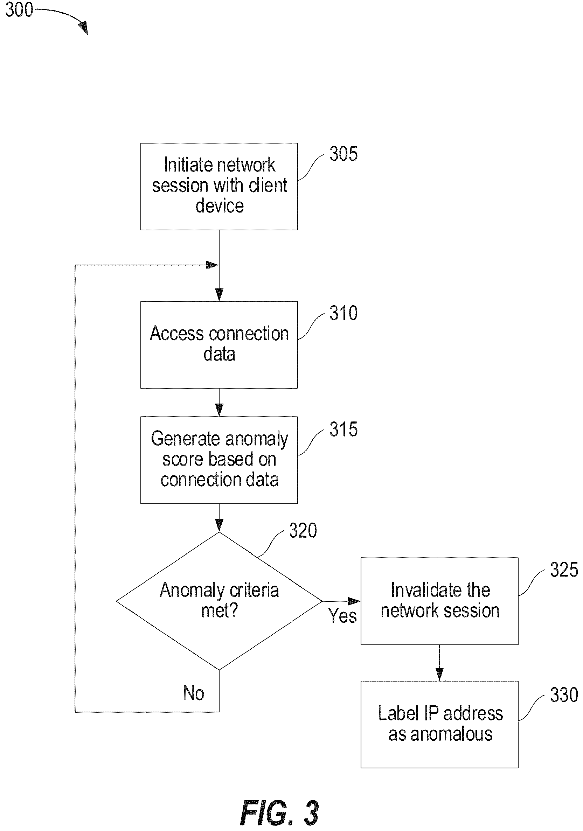

Figure 3 is a flow diagram depicting an example method 300 for detecting anomalous network connectivity, according to some embodiments of the present disclosure. In some embodiments, the method 300 is performed by a server system, such as the server system 110 of Figures 1-2.

At block 305, the server system initiates a network session with a client device (e.g., the client system 105 of Figures 1-2). For example, as discussed above, the client device may request a session to facilitate provisioning of digital services such as performing computational operations for the client device, streaming data to the client device, and the like. Although the illustrated example depicts actually initializing the session at block 305, in some embodiments, block 305 may correspond to receiving a request to initialize a session (without actually initializing the session).

At block 310, the server system collects connection data associated with the (requested and/or initialized) network session. For example, as discussed above, the server system may collect information such as the source address provided in association with the request, the geolocation of the client (e.g., determined based on the IP address of the client), the latency of the session, the bandwidth of the session, the retry rate of the session, the jitter of the session, and the like.

At block 315, the server system generates an anomaly score based on the connection data. For example, as discussed above, the server system may use one or more rules-based algorithms and/or one or more trained machine learning models to quantify or predict whether the session connectivity is anomalous. As discussed above, the connectivity or session may be referred to as anomalous if the client is using (or is believed to be using) a routing service to route the session through one or more proxies (e.g., to obfuscate the actual location and/or identity of the client). In some embodiments, as discussed above, the anomaly score may include a classification or categorization of the session (e.g., a binary classification), a continuous value (e.g., indicating the probability that the session is anomalous), and the like.

At block 320, the server system determines whether one or more anomaly criteria are satisfied. For example, the server system may determine whether the anomaly score (generated at block 315) indicates that the session is anomalous, and/or may determine whether the score meets or exceeds a defined threshold (e.g., a confidence threshold). If not (e.g., if the connection is not deemed anomalous), the method 300 returns to block 310 to collect fresh connection data. In some embodiments, as discussed above, this may include collecting new connection data for each transmission received from the client (e.g., each packet or chunk of upload data 125 of Figure 1). In some embodiments, the server system may collect new connection data periodically (e.g., every minute). In some embodiments, the server system may collect connection data in response to phase or interaction changes (e.g., at the start of each new interaction or phase of the session, such as during session initialization, during browsing, during playback request, and during content streaming). In some embodiments, the server system may collect and/or evaluate connection data randomly or stochastically (e.g., using a random or pseudo-random approach to determine whether and when to evaluate the connection data at any given time).

Returning to block 320, if the server system determines that the anomaly criteria are met, the method 300 continues to block 325, where the server system invalidates the network session. For example, a discussed above, the server system may terminate transmissions to the client, forcing the client to re-initialize (e.g., re-authenticate) the session if they wish to continue receiving the digital service.

At block 330, the server system can label the IP address of the client as potentially anomalous (e.g., updating the repository of anomalous addresses 120 of Figures 1-2). For example, the server system may add the most-recent IP address used by the client during the session to the repository. In some embodiments, the server system may additionally or alternatively add the first IP address used during the session (e.g., during initialization) to the list of anomalous addresses. In some embodiments, if multiple IP addresses were used during the session, the server system may label some or all of these addresses as anomalous. The method 300 then terminates.

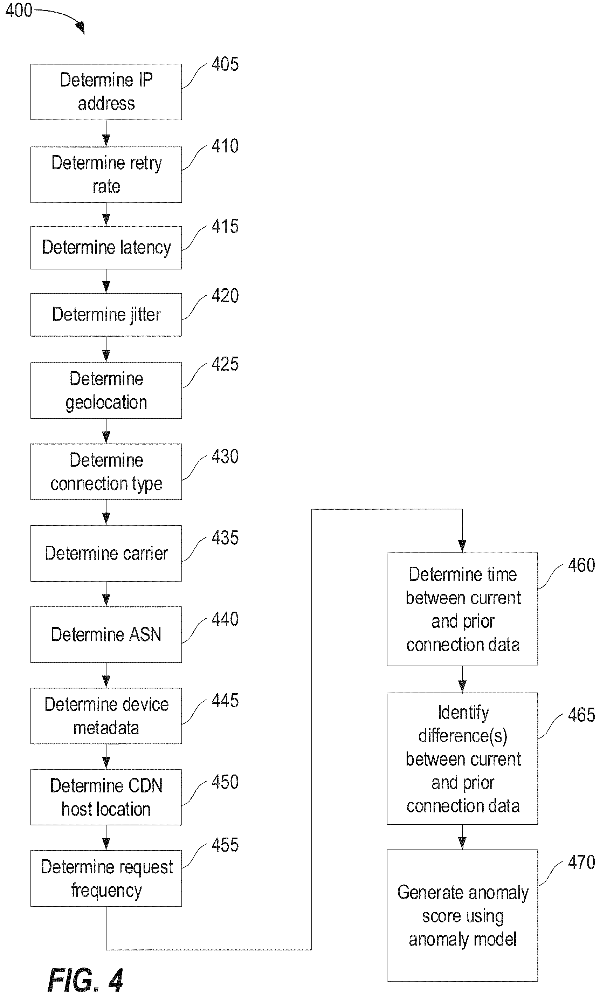

Figure 4 is a flow diagram depicting an example method 400 for generating anomaly scores for network sessions, according to some embodiments of the present disclosure. In some embodiments, the method 400 is performed by a server system, such as the server system 110 of Figures 1-2 and/or the server system discussed above with reference to Figure 3. In some embodiments, the method 400 provides additional detail for block 315 of Figure 3.

Generally, each of the elements of connection data depicted in Figure 4 may be considered optional, depending on the particular implementation. For example, some implementations may utilize all of the depicted features, while some may use a subset of the depicted features (e.g., one implementation may consider retry rate and geolocation, without evaluating jitter or latency). Further, some implementations may use additional features not illustrated in the method 400. Additionally, although the illustrated example depicts a specific ordering of blocks, the various blocks and operations discussed below may generally be performed in any order, and each block may be performed entirely or partially in parallel with any other block (or set of blocks) of the method 400.

At block 405, the server system determines the source IP address of the session (e.g., the IP address used or provided by the client device to indicate the source).

At block 410, the server system determines the retry rate of the session or communication. For example, as discussed above, the retry rate may indicate the percentage or number of times that packets are resent during the communication due to being lost, corrupted, and the like. At block 410, the server system may generally determine the upload retry rate (e.g., the retry rate for the client to transmit data to the server system) and/or the download retry rate (e.g., the retry rate for the server system to transmit data to the client).

At block 415, the server system determines the latency of the session. For example, the server system may determine or estimate the upload latency (e.g., the delay from when the client transmits a packet to when the packet is received by the server system) and/or the download latency (e.g., the delay from when the server system transmits a packet to when the client receives it).

At block 420, the server system determines or estimates the jitter of the session. For example, as discussed above, the jitter may correspond to the magnitude and/or frequency of changes in the session latency (e.g., where high jitter indicates frequent and/or substantial changes in latency across different transmissions, and low jitter indicates infrequent and/or small changes in latency). In some embodiments, the server system may determine or estimate the upload jitter (e.g., the jitter for packets uploaded by the client to the server system) and/or the download jitter (e.g., the jitter for packets transmitted by the server system to the client).

At block 425, the server system determines, estimates, or infers the geolocation of the client. For example, in some cases, IP addresses may be assigned to corresponding locations or regions, allowing the server system to use geolocation services to determine the (approximate) geolocation of the server based on the provided IP address. Of note, at block 425, the server system may determine the alleged geolocation of the client, as the client's actual geolocation may differ (e.g., if the client is using a proxy or routing service).

At block 430, the server system determines a connection type of the session (e.g., the network technology or particular network being used). For example, the server system may determine whether the connection is using (or is purporting to use) a wired or wireless network, wireless local area network (WLAN) such as WiFi, a broadband connection, a 5G connection, and the like.

At block 435, the server system determines the carrier associated with the session (if any). That is, the server system may determine what telecommunication service is providing the network or infrastructure that the session data is being transmitted across.

At block 440, the server system determines the autonomous system number (ANS) of the session. The ANS generally identifies the autonomous system (AS) to which the user device (purportedly) belongs, where an AS corresponds to a group of networks and/or devices with a unified routing policy.

At block 445, the server system determines metadata of the requesting device, if any. For example, the metadata may indicate the type of the device, the model number, the capabilities of the device, and the like.

At block 450, the server system determines the location of the content delivery network (CDN) host that is providing or streaming data associated with the session. Generally, the CDN host may be selected based on factors including load balancing, availability of the desired data, and delivery latency (e.g., based on geographic and/or topological distance between the requesting device and the host). Accordingly, if the CDN host is located a relatively large distance from the (purported) client location (e.g., if there are other host(s) nearer to the client and able to deliver the content), this may indicate potential anomalous usage.

At block 455, the server system determines the request frequency of the session (e.g., how frequently the client is transmitting requests as part of the session).

At block 460, the server system determines the amount of time that elapsed between the most recent set of connection data (e.g., collected at blocks 405, 410, 415, 420, 425, 430, 435, 440, 445, and/or 450, and/or 455) and the prior set of connection data, if any. For example, the server system may determine whether the prior connection data was collected a few hundred milliseconds ago, or a few minutes ago. In some embodiments, the time between the measurements may be useful in evaluating whether the session is anomalous (e.g., because larger differences may be legitimate if there was more time between the recordings, whereas very brief intervals between datasets should result in relatively smaller differences for legitimate users).

At block 465, the server system identifies or quantifies the difference(s) between the current or most recent set of connection data and the prior set, if any. For example, the server system may determine how much the latency, jitter, bandwidth, retry rate, or other features have changed. Similarly, the server system may determine whether the IP address changed (and if so, how many times it has changed). As another example, the server system may determine whether the geolocation changed, and if so, how much it has changed. For example, some change in IP address and/or geolocation may be legitimate (particularly over larger time intervals), such as if the client is physically moving. However, rapid changes or significant changes in distance may be indicative of proxy usage.

At block 470, the server system generates the anomaly score for the session, using an anomaly model, based on the current connection data and/or based on the differences between the current connection data and the prior set of data (and, in some embodiments, the time that elapsed between the sets of connection data). For example, as discussed above, the anomaly model may include or correspond to one or more rules, thresholds, and/or algorithms to generate one or more scores quantifying the probability that the session is anomalous. As another example, as discussed above, the anomaly model may include or correspond to one or more machine learning models to generate one or more scores quantifying the probability or indicating whether the session is anomalous.

As discussed above, the server system may then use these anomaly scores to selectively and dynamically validate or invalidate network sessions, preserving network resources for authenticated and valid users while preventing non-confirming or anomalous connections from accessing such resources.

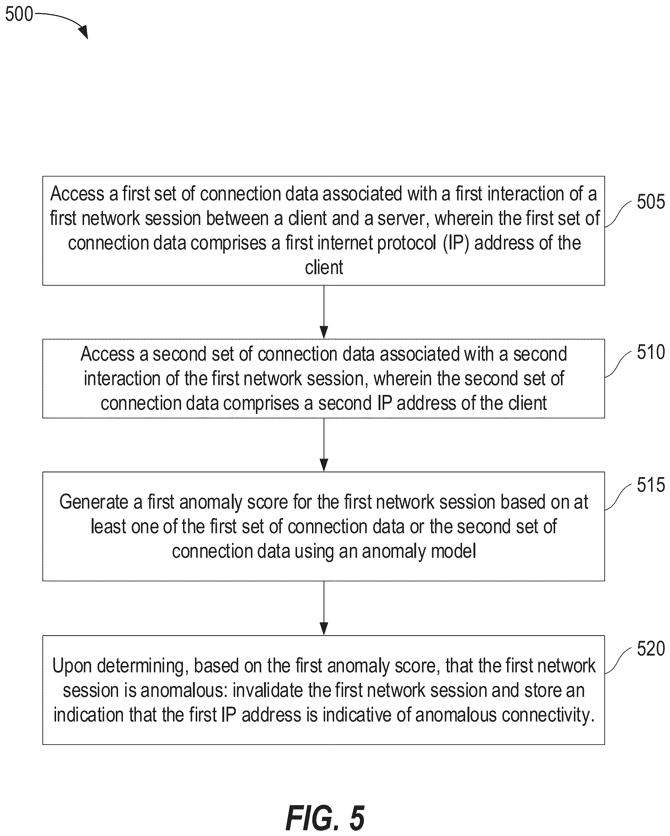

Figure 5 is a flow diagram depicting an example method 500 for identifying anomalous sessions, according to some embodiments of the present disclosure. In some embodiments, the method 500 is performed by a server system, such as the server system 110 of Figures 1-2 and/or the server system discussed above with reference to Figures 3-4.

At block 505, a first set of connection data associated with a first interaction (e.g., with the session component 210 of Figure 2) of a first network session between a client (e.g., the client system 105 of Figures 1-2) and a server (e.g., the server system 110 of Figures 1-2) is accessed, wherein the first set of connection data comprises a first internet protocol (IP) address of the client.

At block 510, a second set of connection data associated with a second interaction (e.g., with the interface component 215 of Figure 2) of the first network session is accessed, wherein the second set of connection data comprises a second IP address of the client.

At block 515, a first anomaly score is generated for the first network session based on at least one of the first set of connection data or the second set of connection data using an anomaly model.

At block 520, upon determining, based on the first anomaly score, that the first network session is anomalous, the first network session is invalidated and an indication that the first IP address is indicative of anomalous connectivity is stored (e.g., in the repository of anomalous addresses 120 of Figures 1-2).

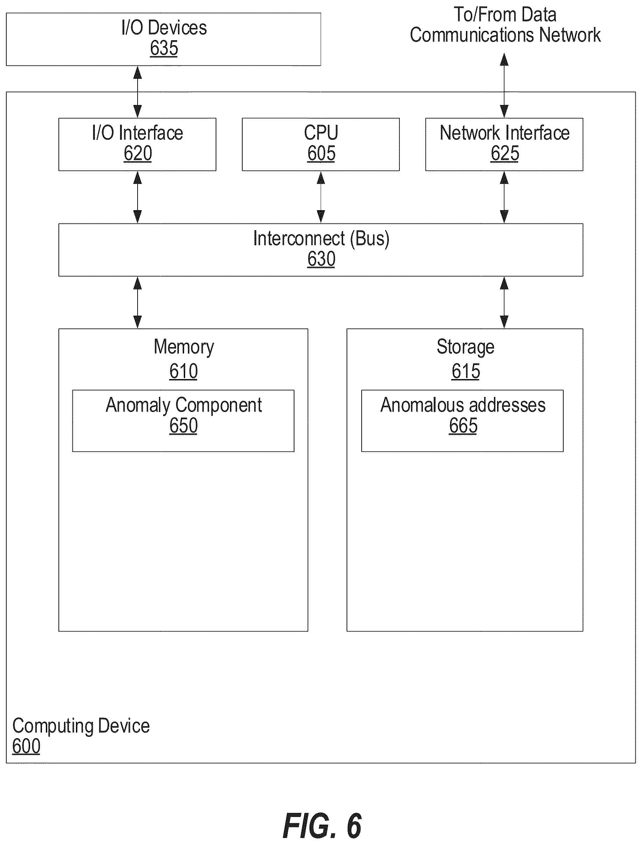

Figure 6 depicts an example computing device 600 configured to perform various embodiments of the present disclosure. Although depicted as a physical device, in embodiments, the computing device 600 may be implemented using virtual device(s), and/or across a number of devices (e.g., in a cloud environment). In one embodiment, the computing device 600 corresponds to or implements a server system, such as the server system 110 of Figures 1-2 and/or the server systems discussed above with reference to Figures 2-5.

As illustrated, the computing device 600 includes a CPU 605, memory 610, a network interface 625, and one or more I/O interfaces 620. Though not included in the depicted example, in some embodiments, the computing device 600 also includes one or more storages. In the illustrated embodiment, the CPU 605 retrieves and executes programming instructions stored in memory 610, as well as stores and retrieves application data residing in memory 610 and/or storage (not depicted). The CPU 605 is generally representative of a single CPU and/or GPU, multiple CPUs and/or GPUs, a single CPU and/or GPU having multiple processing cores, and the like. The memory 610 is generally included to be representative of a random access memory. In an embodiment, if storage is present, it may include any combination of disk drives, flash-based storage devices, and the like, and may include fixed and/or removable storage devices, such as fixed disk drives, removable memory cards, caches, optical storage, network attached storage (NAS), or storage area networks (SAN).

In some embodiments, I/O devices 635 (such as keyboards, monitors, etc.) are connected via the I/O interface(s) 620. Further, via the network interface 625, the computing device 600 can be communicatively coupled with one or more other devices and components (e.g., via a network, which may include the Internet, local network(s), and the like). As illustrated, the CPU 605, memory 610, network interface(s) 625, and I/O interface(s) 620 are communicatively coupled by one or more buses 630.

In the illustrated embodiment, the memory 610 includes an anomaly component 650, which may perform one or more embodiments discussed above. Although depicted as a discrete component for conceptual clarity, in embodiments, the operations of the depicted component (and others not illustrated) may be combined or distributed across any number of components. Further, although depicted as software residing in memory 610, in embodiments, the operations of the depicted component (and others not illustrated) may be implemented using hardware, software, or a combination of hardware and software.

The anomaly component 650 (which may correspond to the anomaly component 115 of Figures 1-2) may generally be used to evaluate and/or quantify whether network sessions are anomalous, as discussed above. For example, the anomaly component 650 may use rules-based approaches, algorithm or threshold-based approaches, machine learning model-based approaches, and the like to generate anomaly scores. These anomaly scores may include classifications or categorizations, continuous values (e.g., probability scores or confidence scores), and the like.

Although not depicted in the illustrated example, in some embodiments, the computing device 600 may include other components to provide or facilitate digital services (e.g., data streaming).

In the illustrated example, the storage 615 includes a set of anomalous addresses 665. Although depicted as residing in storage 615, the depicted data may be stored in any suitable location. Generally, the anomalous addresses 665 (which may correspond to the repository of anomalous addresses 120 of Figures 1-2) may comprise a list of IP addresses that are associated with (or believed to be associated with) anomalous connectivity. For example, the anomalous addresses 665 may include addresses that are (believed to be) in use by proxy or routing systems, as discussed above. In some embodiments, the anomalous addresses 665 may be updated by various components and systems. For example, the anomaly component 650 may update the list of anomalous addresses 665 during runtime, one or more external systems may periodically provide updated information to the anomalous addresses 665, and so on.

In the current disclosure, reference is made to various embodiments. However, it should be understood that the present disclosure is not limited to specific described embodiments. Instead, any combination of the following features and elements, whether related to different embodiments or not, is contemplated to implement and practice the teachings provided herein. Additionally, when elements of the embodiments are described in the form of "at least one of A and B," it will be understood that embodiments including element A exclusively, including element B exclusively, and including element A and B are each contemplated. Furthermore, although some embodiments may achieve advantages over other possible solutions or over the prior art, whether or not a particular advantage is achieved by a given embodiment is not limiting of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, embodiments described herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments described herein may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations or block diagrams of methods, apparatuses (systems), and computer program products according to embodiments of the present disclosure. It will be understood that each block of the flowchart illustrations or block diagrams, and combinations of blocks in the flowchart illustrations or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations or block diagrams.

The flowchart illustrations and block diagrams in the Figures illustrate the architecture, functionality, and operation of possible implementations of systems, methods, and computer program products according to various embodiments of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams or flowchart illustrations, and combinations of blocks in the block diagrams or flowchart illustrations, can be implemented by special purpose hardware-based systems that perform the specified functions or acts, or combinations of special purpose hardware and computer instructions.

While the foregoing is directed to embodiments of the present disclosure, other and further embodiments of the disclosure may be devised without departing from the basic scope thereof, and the scope thereof is determined by the claims that follow.

Example 1 is a method, comprising: accessing a first set of connection data associated with a first interaction of a first network session between a client and a server, wherein the first set of connection data comprises a first internet protocol (IP) address of the client; accessing a second set of connection data associated with a second interaction of the first network session, wherein the second set of connection data comprises a second IP address of the client; generating a first anomaly score for the first network session based on at least one of the first set of connection data or the second set of connection data using an anomaly model; and upon determining, based on the first anomaly score, that the first network session is anomalous: invalidating the first network session; and storing an indication that the first IP address is indicative of anomalous connectivity.

In Example 2, the second set of connection data of Example 1 further comprises at least one of: (i) a retry rate of the first network session, (ii) a latency of the first network session, (iii) a jitter of the first network session, (iv) a geolocation of the client, (v) a connection type of the first network session, (vi) a carrier of the first network session, (vii) metadata of the client, (viii) a geolocation of a content host associated with the first session, or (ix) a request frequency of the first network session.

In Example 3, the first anomaly score of Example 1 is generated based at least in part on determining whether the first and second IP addresses match.

In Example 4, the first and second IP addresses of Example 3 do not match, and the first anomaly score is generated based at least in part on a time that elapsed between the first interaction and the second interaction.

In Example 5, generating the first anomaly score of Example 1 comprises: determining a set of differences between the first set of connection data and the second set of connection data; and processing the set of differences using the anomaly model.

In Example 6, the first interaction of Example 1 corresponds to an initialization of the first network session, and the second interaction corresponds to at least one of downloading data from the server or uploading data to the server.

In Example 7, the second interaction of Example 6 corresponds to streaming media from the server.

In Example 8, the method of Example 1, further comprises: accessing a third set of connection data associated with a first interaction of a second network session, wherein the third set of connection data comprises the first IP address; generating a second anomaly score for the second network session based at least in part on the third set of connection data using the anomaly model; and upon determining, based on the second anomaly score, that the second network session is not anomalous, storing an indication that the first IP address is not indicative of anomalous connectivity.

In Example 9, the anomaly model of Example 1 comprises a set of defined rules to identify anomalous connectivity.

In Example 10, the anomaly model of Example 1 comprises a machine learning model trained to identify anomalous connectivity.

Example 11 is one or more non-transitory computer readable media containing, in any combination, computer program code that, when executed by operation of any combination of one or more processors, performs an operation comprising: accessing a first set of connection data associated with a first interaction of a first network session between a client and a server, wherein the first set of connection data comprises a first internet protocol (IP) address of the client; accessing a second set of connection data associated with a second interaction of the first network session, wherein the second set of connection data comprises a second IP address of the client; generating a first anomaly score for the first network session based on at least one of the first set of connection data or the second set of connection data using an anomaly model; and upon determining, based on the first anomaly score, that the first network session is anomalous: invalidating the first network session; and storing an indication that the first IP address is indicative of anomalous connectivity.

In Example 12, the second set of connection data of Example 11 further comprises at least one of: (i) a retry rate of the first network session, (ii) a latency of the first network session, (iii) a jitter of the first network session, (iv) a geolocation of the client, (v) a connection type of the first network session, (vi) a carrier of the first network session, (vii) metadata of the client, (viii) a geolocation of a content host associated with the first session, or (ix) a request frequency of the first network session.

In Example 13, the first and second IP addresses of Example 11 do not match, and the first anomaly score is generated based at least in part on a time that elapsed between the first interaction and the second interaction.

In Example 14, generating the first anomaly score of Example 11 comprises: determining a set of differences between the first set of connection data and the second set of connection data; and processing the set of differences using the anomaly model.

In Example 15, the operation of Example 11 further comprises: accessing a third set of connection data associated with a first interaction of a second network session, wherein the third set of connection data comprises the first IP address; generating a second anomaly score for the second network session based at least in part on the third set of connection data using the anomaly model; and upon determining, based on the second anomaly score, that the second network session is not anomalous, storing an indication that the first IP address is not indicative of anomalous connectivity.

Example 16 is a system, comprising: one or more processors; and one or more memories storing a program, which, when executed on any combination of the one or more processors, performs operations, the operations comprising: accessing a first set of connection data associated with a first interaction of a first network session between a client and a server, wherein the first set of connection data comprises a first internet protocol (IP) address of the client; accessing a second set of connection data associated with a second interaction of the first network session, wherein the second set of connection data comprises a second IP address of the client; generating a first anomaly score for the first network session based on at least one of the first set of connection data or the second set of connection data using an anomaly model; and upon determining, based on the first anomaly score, that the first network session is anomalous: invalidating the first network session; and storing an indication that the first IP address is indicative of anomalous connectivity.

In Example 17, the second set of connection data of Example 16 further comprises at least one of: (i) a retry rate of the first network session, (ii) a latency of the first network session, (iii) a jitter of the first network session, (iv) a geolocation of the client, (v) a connection type of the first network session, (vi) a carrier of the first network session, (vii) metadata of the client, (viii) a geolocation of a content host associated with the first session, or (ix) a request frequency of the first network session.

In Example 18, the first and second IP addresses of Example 16 do not match, and the first anomaly score is generated based at least in part on a time that elapsed between the first interaction and the second interaction.

In Example 19, generating the first anomaly score of Example 16 comprises: determining a set of differences between the first set of connection data and the second set of connection data; and processing the set of differences using the anomaly model.

In Example 20, the operation of Example 16 further comprises: accessing a third set of connection data associated with a first interaction of a second network session, wherein the third set of connection data comprises the first IP address; generating a second anomaly score for the second network session based at least in part on the third set of connection data using the anomaly model; and upon determining, based on the second anomaly score, that the second network session is not anomalous, storing an indication that the first IP address is not indicative of anomalous connectivity.

## Claims

1. A method, comprising:
accessing a first set of connection data associated with a first interaction of a first network session between a client and a server, wherein the first set of connection data comprises a first internet protocol (IP) address of the client;
accessing a second set of connection data associated with a second interaction of the first network session, wherein the second set of connection data comprises a second IP address of the client;
generating a first anomaly score for the first network session based on at least one of the first set of connection data or the second set of connection data using an anomaly model; and
upon determining, based on the first anomaly score, that the first network session is anomalous:
invalidating the first network session; and
storing an indication that the first IP address is indicative of anomalous connectivity.

2. The method of claim 1, wherein the second set of connection data further comprises at least one of: (i) a retry rate of the first network session, (ii) a latency of the first network session, (iii) a jitter of the first network session, (iv) a geolocation of the client, (v) a connection type of the first network session, (vi) a carrier of the first network session, (vii) metadata of the client, (viii) a geolocation of a content host associated with the first session, or (ix) a request frequency of the first network session.

3. The method of any one of claims 1 or 2, wherein the first anomaly score is generated based at least in part on determining whether the first and second IP addresses match.

4. The method of claim 3, wherein:
the first and second IP addresses do not match, and
the first anomaly score is generated based at least in part on a time that elapsed between the first interaction and the second interaction.

5. The method of any one of the preceding claims, wherein generating the first anomaly score comprises:
determining a set of differences between the first set of connection data and the second set of connection data; and
processing the set of differences using the anomaly model.

6. The method of any one of the preceding claims, wherein:
the first interaction corresponds to an initialization of the first network session, and
the second interaction corresponds to at least one of downloading data from the server or uploading data to the server.

7. The method of claim 6, wherein the second interaction corresponds to streaming media from the server.

8. The method of any one of the preceding claims, further comprising:
accessing a third set of connection data associated with a first interaction of a second network session, wherein the third set of connection data comprises the first IP address;
generating a second anomaly score for the second network session based at least in part on the third set of connection data using the anomaly model; and
upon determining, based on the second anomaly score, that the second network session is not anomalous, storing an indication that the first IP address is not indicative of anomalous connectivity.

9. The method of any one of the preceding claims, wherein the anomaly model comprises a set of defined rules to identify anomalous connectivity.

10. The method of any one of the preceding claims, wherein the anomaly model comprises a machine learning model trained to identify anomalous connectivity.

11. A system, comprising:
one or more processors; and
one or more memories storing a program, which, when executed on any combination of the one or more processors, performs operations, the operations comprising:
accessing a first set of connection data associated with a first interaction of a first network session between a client and a server, wherein the first set of connection data comprises a first internet protocol (IP) address of the client;
accessing a second set of connection data associated with a second interaction of the first network session, wherein the second set of connection data comprises a second IP address of the client;
generating a first anomaly score for the first network session based on at least one of the first set of connection data or the second set of connection data using an anomaly model; and
upon determining, based on the first anomaly score, that the first network session is anomalous:
invalidating the first network session; and
storing an indication that the first IP address is indicative of anomalous connectivity.

12. The system of claim 11, wherein the second set of connection data further comprises at least one of: (i) a retry rate of the first network session, (ii) a latency of the first network session, (iii) a jitter of the first network session, (iv) a geolocation of the client, (v) a connection type of the first network session, (vi) a carrier of the first network session, (vii) metadata of the client, (viii) a geolocation of a content host associated with the first session, or (ix) a request frequency of the first network session.

13. The system of any one of claims 11 or 12, wherein:
the first and second IP addresses do not match, and
the first anomaly score is generated based at least in part on a time that elapsed between the first interaction and the second interaction.

14. The system of any one of claims 11 to 13, wherein generating the first anomaly score comprises:
determining a set of differences between the first set of connection data and the second set of connection data; and
processing the set of differences using the anomaly model.

15. The system of any one of claims 11 to 14, the operation further comprising:
accessing a third set of connection data associated with a first interaction of a second network session, wherein the third set of connection data comprises the first IP address;
generating a second anomaly score for the second network session based at least in part on the third set of connection data using the anomaly model; and
upon determining, based on the second anomaly score, that the second network session is not anomalous, storing an indication that the first IP address is not indicative of anomalous connectivity.
